# EUROPÄISCHE PATENTSCHRIFT

(11) **EP 1 825 932 B1**
(45) Veröffentlichungstag und Bekanntmachung des Hinweises auf die Patenterteilung: **04.07.2012**
(21) Anmeldenummer: 06025014.9
(22) Anmeldetag: 04.12.2006
(51) Int. Cl.: B07B 1/18, B07B 1/46, B01D 29/11, B01D 33/067

(54) **Verfahren zur Herstellung einer rotationssymmetrischen, insbesondere zylindrischen Siebvorrichtung**
Method for the manufacture of a rotation symmetric screening device , in particular a cylindrical, screening device
Procédé de fabrication d'un dispositif de criblage à rotation symétrique, en particulier cylindrique

(30) Priorität: 22.02.2006 DE 102006007660
(43) Veröffentlichungstag der Anmeldung: 29.08.2007
(73) Patentinhaber: Voith Paper Patent GmbH, 89522 Heidenheim (DE)
(72) Erfinder: Lange, Werner, 89564 Nattheim (DE)

(56) Entgegenhaltungen:
- EP-A1- 0 499 154
- EP-A1- 0 808 941
- DE-A1- 3 927 748
- DE-A1- 4 435 538

## Beschreibung

Die Erfindung bezieht sich auf ein Verfahren gemäß dem Oberbegriff des Anspruchs 1.

Ein bekanntes Beispiel für den Einsatz von Siebvorrichtungen, die nach dem Verfahren dieser Art herstellbar sind, ist das Sortieren von Faserstoffsuspensionen, wie es in Drucksortierern der Papier erzeugenden Industrie durchgeführt wird. Dabei sollen die in der Suspension enthaltenen Fasern durch das Sieb hindurch treten, während die nicht gewünschten festen Bestandteile an dem Spalt abgewiesen und aus der Siebvorrichtung wieder herausgeleitet werden. Dadurch, dass die Öffnungen eine im Wesentlichen längliche Form haben, also Schlitze oder Spalten sind, werden faserige Teilchen leichter durchgelassen als die kubischen, auch wenn beide Arten in ähnlicher Größenordnung vorliegen sollten. Mit einer derartigen Sortiertechnologie ist daher ein sehr guter Ausscheidungseffekt von nicht faserigen Störstoffen aus Faserstoffsuspensionen möglich. Denkbar ist auch ein Einsatz zur Trennung unterschiedlicher Faserbestandteile, der sogenannten Faserfraktionierung. Voraussetzung ist allerdings eine hohe Präzision der Schlitzform auf der ganzen Siebfläche. Bei hohen Anforderungen werden zumeist zylindrische Siebvorrichtungen, sogenannte Siebkörbe, verwendet.

Ein mögliches Verfahren, um solche Siebkörbe herzustellen, zeigt die DE 39 27 748 A1, bei der die Profilstäbe durch plastisches Verformen der mit Vertiefungen für die Stäbe vorgesehenen Halteringe eingeklemmt werden. Hierzu werden für derartige Herstellungsverfahren besonders geeignete Profilstäbe verwendet. Mit Hilfe dieses Verfahrens gelang es, die Herstellung wesentlich zu verbilligen. Das Verfahren wird bei Siebkörben verwendet, bei denen die Stäbe am Innenrand der Halteringe eingesetzt werden. Eine solche Anordnung der Stäbe wird gewählt, wenn die Suspension von innen nach außen die Schlitze passieren soll (zentrifugale Fahrweise). Für die zentripetale Fahrweise, also bei einer Suspensionsströmung von außen nach innen, sind z.B. Siebvorrichtungen gemäß DE 44 35 538 A1 verwendbar.

Siebvorrichtungen, die unter Verwendung des erfindungsgemäßen Verfahrens hergestellt worden sind, werden bevorzugt in Drucksortierern der Papier erzeugenden Industrie eingesetzt. Wichtig ist dabei, dass die Dimensionen der Sieböffnungen mit sehr geringen Toleranzen eingehalten werden. Um sie von Verstopfungen frei zu halten, sind zumeist Räumer erforderlich, die in geringerem Abstand an der Siebfläche vorbei bewegt werden und die hydraulische Impulse erzeugen. Siebvorrichtungen für den Einsatz in Drucksortierern müssen daher sehr präzise gefertigt sein und hohen Belastungen standhalten.

Der Erfindung liegt die Aufgabe zu Grunde, ein Verfahren zu schaffen, mit dem Siebvorrichtungen wirtschaftlich noch günstiger herstellbar sind. Es soll ohne großen Aufwand auch für verschiedene Größen der Siebvorrichtungen verwendbar sein. Präzision und Festigkeit der hergestellten Siebvorrichtungen sollen hoch sein, um sie in Drucksortierern verwenden zu können.

Diese Aufgabe wird durch die im Kennzeichen des Anspruchs 1 genannten Maßnahmen erfüllt.

In Unteransprüchen sind vorteilhafte Ausgestaltungen des Verfahrens beschrieben.

Mit Hilfe des erfindungsgemäßen Verfahrens gelingt es, insbesondere den Vorgang des Umformens präzise und relativ einfach durchführen zu können. Die zur Umformung benötigten Biegekräfte werden am Umfang der Stabhalter angesetzt. In diesem Stadium des Herstellungsverfahrens, d.h. also bevor die endgültige Umformung zu einem geschlossenen Zylinder vorgenommen werden soll, besteht die noch unfertige Siebvorrichtung aus einem gebogenen Teil, dessen Krümmungsradius noch größer ist als der Krümmungsradius der fertigen Siebvorrichtung. Daher sind die Stabhalter an ihren Stoßstellen noch geöffnet. Durch den abschließenden Umformvorgang werden die genannten Stoßstellen in Kontakt gebracht oder zumindest so weit angenähert, dass eine Fixierung, z.B. durch Schweißen vorgenommen werden kann. Die Form des umgeformten Bauteiles wird durch die am Umfang eingeleiteten Biegekräfte und/oder Biegemomente bestimmt. Die bisher üblicherweise aufgebrachte Gegenkraft mit Hilfe einer innerhalb des Bauteils wirkenden Gegenform, z.B. eines sogenannten Biegedornes, kann entfallen. Bekanntlich weist eine solche Gegenform eine Fläche auf, die komplementär zur der gewünschten Form des zu biegenden Bauteiles ist. Insgesamt wird die Biegemaschine, bei der es sich um eine große teure Apparatur handelt, wesentlich vereinfacht. Außerdem ist die Umstellung der Biegemaschine auf Siebvorrichtungen unterschiedlichen Durchmessers leicht durchzuführen, da in der Regel lediglich das Steuerprogramm geändert werden muss.

Die Erfindung und ihre Vorteile werden erläutert an Hand von Zeichnungen. Dabei zeigen:
- Figur 1:: Das Prinzip des Umformens gemäß des erfindungsgemäßen Verfahrens;
- Figur 2:: Eine schematische Darstellung des Umformens;
- Figur 3:: Einen fertigen Siebkorb in perspektivischer Skizze;
- Figur 4:: Teil eines erfindungsgemäß hergestellten Schlitzsiebes;
- Figur 5:: Teil eines erfindungsgemäß hergestellten Lochsiebes;
- Figur 6:: Schematisch: Eine Biegemaschine bei Durchführung eines erfindungsgemäßen Verfahrensschrittes.

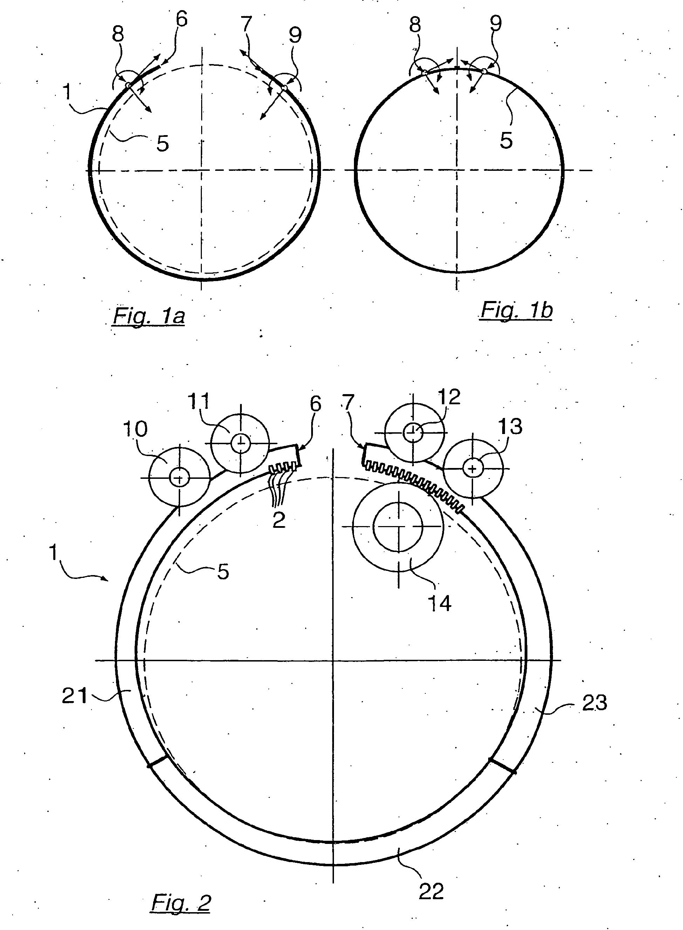

Die Figuren 1 a und 1 b zeigen das Prinzip der Verformung in zwei Skizzen. In Fig. 1 a ist ein Stabhalter 1 angedeutet , und zwar in einem Zustand, bei dem die erfindungsgemäße Umformung noch nicht abgeschlossen ist, also die Stoßenden 6 und 7 noch voneinander entfernt sind. Das bedeutet, dass der Krümmungsradius dieses Stabhalters 1 größer ist als der Kreis 5, dessen Krümmungsradius dem des fertigen Zylinders entspricht. Die Biegekräfte werden an den Stellen 8 und 9 auf den Stabhalter 1 übertragen. Als Biegekräfte können - wie hier durch Vektoren angedeutet - radial nach innen gerichtete Kräfte, Kräfte in Umfangsrichtung oder Biegemomente, einzeln oder in Kombination aufgebracht werden. Die Biegevorrichtungen, die bei der technischen Durchführung des Verfahrens eingesetzt werden, sind während des Umformens so zu bewegen, dass sich die Stoßenden 6 und 7 nähern, bzw. in Kontakt kommen. Dieser Vorgang ist in der Fig. 1 b dargestellt. Nach Abschluss dieser Umformung und dem Wegfall der Biegekräfte hat die Siebvorrichtung eine zylindrische Form, deren Projektion der Kreis 5 ist.

Wie in Fig. 2 etwas detaillierter dargestellt ist, kann der Stabhalter 1 aus mehreren (hier drei) Segmenten 21, 22, 23 bestehen, die in einem vorher durchgeführten Arbeitsgang bereits miteinander verbunden, z.B. verschweißt wurden. Man sieht in dieser Darstellung auch einige der Profilstäbe 2 eingezeichnet, die sich am Innenumfang des Stabhalters 1 eingesetzt sind. Anzumerken ist bei dieser Darstellung, dass eine Siebvorrichtung mit mindestens zwei Stabhaltern 1 (meistens mehr) versehen sein muss und dass hier auf Grund der Darstellung in Draufsicht nur ein einziger Stabhalter sichtbar ist. Um in einer technischen Ausführung des erfindungsgemäßen Verfahrens sowohl Kräfte als auch im Bedarfsfall Biegemomente auf die Stabhalter 1 übertragen zu können, werden gemäß Fig. 2 vier Biegevorrichtung 10, 11, 12, 13 verwendet, d.h. die Biegekräfte werden an vier Stellen auf die Stabhalter 1 übertragen. Die Biegevorrichtung 10, 11, 12, 13 können mit Vorteil so ausgerüstet sein, dass während des Biegevorgangs ein überstehender Teil des Stabhalters 1 eingeklemmt wird. Dabei können jeweils zwei Biegevorrichtungen, z.B. 10 und 11, bzw. 12 und 13, so zusammenwirken, dass sie gemeinsam ein Biegemoment erzeugen. Wie bereits erwähnt, ist es von Vorteil, die Biegevorrichtungen während des Umformens so zu bewegen, dass die Stabhalter 1 an ihren Stoßstellen 6 und 7 zusammen kommen. In anderen Fällen könnten sie langsam rotieren und dadurch die Stoßstellen 6 und 7 zusammen fahren. Es ist von Vorteil, die Stoßstellen 6 und 7 so zu gestalten, dass die erforderliche Dimensionierung der Siebvorrichtung gerade dann gewährleistet ist, wenn die zwei Stoßstellen in Kontakt kommen. Dadurch ist eine sehr präzise sichere Fertigung möglich.

Es kann zweckmäßig sein, eine oder mehrere Haltewalzen 14 an der Innenkontur vorzusehen, die das Festklemmen der Stabhalter 1 in den Biegevorrichtungen unterstützen und/oder einen Gegenhalt für die Biegevorrichtungen 12 und/oder 13 bilden. Sie sind normalerweise nicht dazu bestimmt, Biegekräfte zum Umformen der Stabhalter 1 aufzubringen.

Nicht gezeigt in dieser Darstellung ist der sich anschließende Arbeitsgang, bei dem eine feste Verbindung der Stoßstellen 6 und 7, z.B. durch Schweißen hergestellt wird. Mit Vorteil werden die Biegekräfte erst nach der erfolgten Verbindung an den Stoßstellen zurückgenommen.

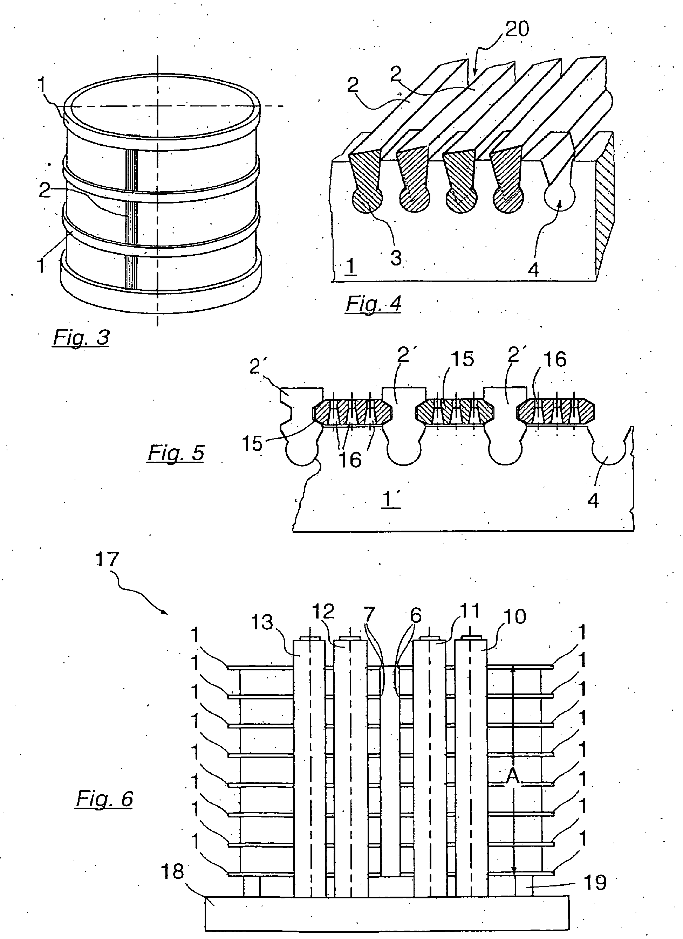

Ein fertiger erfindungsgemäß hergestellter Siebkorb ist in Fig. 3 schematisch und perspektivisch dargestellt. Man sieht, dass in diesem Falle vier Stabhalter 1 verwendet werden, an deren Innenumfang die Profilstäbe 2 eingeklemmt sind (nur wenige gezeichnet). Dabei sind die Profilstäbe 2 achsparallel ausgerichtet. Wie in Fig. 4 gezeigt, sind die Profilstäbe 2 mit ihren Stabfüßen 3 in Aussparungen 4 der Stabhalter 1 eingesetzt. Sie können so angeordnet sein, dass sich zwischen ihnen jeweils eine schlitzförmige Sieböffnung 20 befindet. In der Praxis haben solche Schlitze oft eine Weite zwischen 0,08 und 2 mm. Solche Siebkörbe sind bekannt z.B. aus der EP 0 417 408. Es besteht aber auch die Möglichkeit, mit Hilfe des erfindungsgemäßen Verfahrens Lochsiebkörbe herzustellen. Ein Beispiel hierfür zeigt die Fig. 5, bei der sich zwischen den Profilstäben 2 Lochleisten 15 befinden, die mit zylindrischen und/oder konischen Sieböffnungen 16 (oder Kombinationen von beiden) versehen sind. Eine solche Siebvorrichtung ist z.B. in der DE 196 35 189 beschrieben. Zu den Figuren 4 und 5 ist noch anzumerken, dass an diesen Teildarstellungen die Krümmung der Stabhalter 1 bzw. 1' nicht sichtbar ist.

Fig. 6 zeigt in grob schematischer Form eine zur Durchführung des Verfahrens geeignete Biegemaschine 17. Das Arbeitsprinzip und die . Situation im Fertigungsablauf, entspricht etwa dem, was in Fig. 2 dargestellt ist. So weist auch die Biegemaschine 17 gemäß Fig. 6 vier Biegevorrichtungen 10, 11, 12, 13 auf, welche bei einer senkrechten Anordnung der Maschine auch als Biegetürme bezeichnet werden können. Sie können so konstruiert sein, dass es möglich ist, die Überstände der Stabhalter 1 zeitweise festzuklemmen. Die Biegemaschine 17 weist einen Rahmen 18 auf mit nur grob angedeuteten Stützelementen 19 für die zu biegenden Bauteile. Mit Vorteil sind die Biegevorrichtungen 10, 11, 12, 13 in diesem Rahmen seitlich verfahrbar, so dass in der bereits beschriebenen Weise das erfindungsgemäße Verfahren durchgeführt werden kann. Zweckmäßigerweise haben die Biegevorrichtungen 10, 11, 12, 13 eine Höhe, die es ermöglicht, die Biegekräfte über die gesamte Axialerstreckung A der fertigen Siebvorrichtung einzuleiten.

## Patentansprüche

1. Verfahren zur Herstellung einer rotationssymmetrischen, insbesondere zylindrischen Siebvorrichtung mit einer Vielzahl von Profilstäben (2), bei dem
1.1 Stoßenden (6, 7) aufweisende Stabhalter (1, 1') mit randoffenen Aussparungen (4) versehen werden, deren Form den Stabfüßen (3) der Profilstäbe (2, 2') im Wesentlichen komplementär entspricht,
1.2 die Profilstäbe (2, 2') parallel zueinander in die randoffenen Aussparungen (4) der Stabhalter (1, 1') eingesetzt werden, wobei der Krümmungsradius der Stabhalter (1, 1') größer als der Krümmungsradius der fertigen Siebvorrichtung ist,
1.3 anschließend die Stabhalter (1, 1') zu Ringen umgeformt werden, an deren Innenumfang sich die Aussparungen (4) befinden, wobei sich die Aussparungen (4) verengen und die Profilstäbe (2,2') einklemmen,
**dadurch gekennzeichnet,**
**dass** die beim Umformen benötigten Biegekräfte an mindestens zwei Stellen (8, 9) an den nicht mit Aussparungen (4) versehenen Seiten der Stabhalter (1, 1') übertragen werden und dass die Stabhalter (1, 1') nach der Umformung zu vollständigen Ringen an ihren beiden Stoßenden (6, 7) miteinander verbunden werden.

2. Verfahren nach Anspruch 1,
**dadurch gekennzeichnet,**
**dass** sich die Stelle (8, 9) zur Einleitung der Biegekräfte im Wesentlichen über die axiale Erstreckung (A) der Siebvorrichtung erstreckt.

3. Verfahren nach Anspruch 1 oder 2,
**dadurch gekennzeichnet,**
**dass** die Stelle (8, 9) während des Umformens am Stabhalter (1, 1') fixiert ist.

4. Verfahren nach einem der voran stehenden Ansprüche,
**dadurch gekennzeichnet,**
**dass** die Biegekräfte sowohl nach radial innen als auch in Umfangsrichtung wirken.

5. Verfahren nach einem der voran stehenden Ansprüche,
**dadurch gekennzeichnet,**
**dass** beim Umformen keine die Umformung beeinflussenden Kräfte auf die Innenfläche des umzuformenden Bauteiles übertragen werden.

6. Verfahren nach einem der voran stehenden Ansprüche,
**dadurch gekennzeichnet,**
**dass** beim Umformen keine Gegenform verwendet wird.

7. Verfahren nach einem der voran stehenden Ansprüche,
**dadurch gekennzeichnet,**
**dass** die Biegekräfte auch während der Verbindung der Stabhalter zu vollständigen Ringen aufgebracht werden.

8. Verfahren nach einem der voran stehenden Ansprüche,
**dadurch gekennzeichnet,**
**dass** die Stabhalter beim Umformen in den die Biegekräfte aufbringenden Biegevorrichtungen (10, 11, 12, 13 ) eingeklemmt werden.

9. Verfahren nach einem der voran stehenden Ansprüche,
**dadurch gekennzeichnet,**
**dass** die Einleitung der Biegekräfte an maximal vier Stellen vorgenommen wird, wozu vier Biegevorrichtungen (10, 11, 12, 13) benutzt werden.

10. Verfahren nach Anspruch 8 oder 9,
**dadurch gekennzeichnet,**
**dass** jeweils zwei Biegevorrichtungen (10, 11, 12, 13) eine Biege-Gruppe bilden, die im Zusammenwirken ein Biegemoment auf die Stabhalter (1, 1') überträgt.

11. Verfahren nach einem der Ansprüche 1 bis 8,
**dadurch gekennzeichnet,**
**dass** die Einleitung der Biegekräfte an sechs Stellen vorgenommen wird, wozu vier Biegeeinrichtungen (10, 11, 12, 13) und zwei Stützwalzen (14) verwendet werden.

12. Verfahren nach Anspruch 11,
**dadurch gekennzeichnet,**
**dass** jeweils zwei Biegevorrichtungen (10, 11, 12, 13) und eine Stützwalze (14) eine Biege-Gruppe bilden, die im Zusammenwirken ein Biegemoment auf die Stabhalter (1, 1') überträgt.

13. Verfahren nach einem der voran stehenden Ansprüche,
**dadurch gekennzeichnet,**
**dass** die Stabhalter (1, 1') an ihren Stoßenden (6, 7) durch Schweißen miteinander verbunden werden.

14. Verfahren nach einem der voran stehenden Ansprüche,
**dadurch gekennzeichnet,**
**dass** die Umformung und die feste Verbindung der Stabhalter (1, 1') mit derselben Maschine durchgeführt werden.

15. Verfahren nach einem der voran stehenden Ansprüche,
**dadurch gekennzeichnet,**
**dass** die Siebvorrichtung aus Segmenten (21, 22, 23) zusammengesetzt wird, wobei Stabhaltersegmente mit Profilstäben (2, 2') versehen und anschließend an ihren Stoßstellen zusammengefügt, insbesondere zusammengeschweißt werden, dass zwei Stoßstellen (7, 8) offen bleiben und dass sie dann zu einem geschlossenen Zylinder umgeformt werden.

## Claims

1. Method for producing a rotationally symmetrical, in particular cylindrical, screening device having a multiplicity of profiled rods (2), in which 1.1 rod holders (1, 1') having butt ends (6, 7) are provided with open-edged recesses (4), the shape of which corresponds to the roots (3) of the profiled rods (2, 2') in a substantially complementary manner,
1.2 the profiled rods (2, 2') are inserted parallel to one another into the open-edged recesses (4) in the rod holders (1, 1'), the radius of curvature of the rod holders (1, 1') being greater than the radius of curvature of the finished screening device, 1.3 the rod holders (1, 1') are subsequently shaped into rings, on the inner circumference of which the recesses (4) are located, the recesses (4) narrowing and clamping in the profiled rods (2, 2'),
**characterized**
**in that** the bending forces needed during the shaping are transmitted at at least two locations (8, 9) on the sides of the rod holders (1, 1') not provided with recesses (4), and
**in that**, following the shaping into complete rings, the rod holders (1, 1') are joined to each other at their two butt ends (6, 7).

2. Method according to Claim 1,
**characterized in that**
the location (8, 9) for introducing the bending forces extends substantially over the axial extent (A) of the screening device.

3. Method according to Claim 1 or 2,
**characterized in that**
the location (8, 9) is fixed on the rod holder (1, 1') during the shaping.

4. Method according to one of the preceding claims,
**characterized in that**
the bending forces act both radially inwards and in the circumferential direction.

5. Method according to one of the preceding claims,
**characterized in that**
during the shaping, no forces influencing the shaping are transmitted to the inner surface of the component to be shaped.

6. Method according to one of the preceding claims,
**characterized in that**
no opposing mould is used during the shaping.

7. Method according to one of the preceding claims,
**characterized in that**
the bending forces are also applied during the joining of the rod holders to form complete rings.

8. Method according to one of the preceding claims,
**characterized in that**
during the shaping, the rod holders are clamped into the bending devices (10, 11, 12, 13) applying the bending forces.

9. Method according to one of the preceding claims,
**characterized in that**
the bending forces are introduced at a maximum of four locations, for which purpose four bending devices (10, 11, 12, 13) are used.

10. Method according to Claim 8 or 9,
**characterized in that**
in each case two bending devices (10, 11, 12, 13) form a bending group which, with interaction, transmits a bending moment to the rod holders (1, 1').

11. Method according to one of Claims 1 to 8,
**characterized in that**
the bending forces are introduced at six locations, for which purpose four bending devices (10, 11, 12, 13) and two supporting rolls (14) are used.

12. Method according to Claim 11,
**characterized in that**
in each case two bending devices (10, 11, 12, 13) and a supporting roll (14) form a bending group which, with interaction, transmits a bending moment to the rod holders (1, 1').

13. Method according to one of the preceding claims,
**characterized in that**
the rod holders (1, 1') are joined to one another at their butt ends (6, 7) by welding.

14. Method according to one of the preceding claims,
**characterized in that**
the shaping and the permanent joining of the rod holders (1 1') are carried out with the same machine.

15. Method according to one of the preceding claims,
**characterized**
**in that** the screening device is assembled from segments (21, 22, 23), rod holder segments being provided with profiled rods (2, 2') and then being joined together at their abutting points, in particular welded together, in that two abutting points (6, 7) remain open and in that they are then shaped into a closed cylinder.

## Revendications

1. Procédé de fabrication d'un dispositif de criblage à symétrie de révolution, en particulier cylindrique, comprenant une pluralité de barres profilées (2), dans lequel :
1.1 des supports de barres (1, 1') présentant des extrémités de butée (6, 7), avec des évidements (4) ouverts aux bords, sont prévus, leur forme correspondant aux bases de barre (3) des barres profilées (2, 2') de manière substantiellement complémentaire,
1.2 les barres profilées (2, 2') sont insérées parallèlement les unes aux autres dans les évidements (4) ouverts aux bords des supports de barres (1, 1'), le rayon de courbure des supports de barres (1, 1') étant supérieur au rayon de courbure du dispositif de criblage fini,
1.3 ensuite les supports de barres (1, 1') sont façonnés en forme d'anneaux sur la périphérie intérieure desquels se trouvent les évidements (4), les évidements (4) se rétrécissant et serrant les barres profilées (2, 2'),
**caractérisé en ce que**
les forces de flexion nécessaires lors du façonnage sont transmises au niveau d'au moins deux points (8, 9) sur les côtés des supports de barres (1, 1') non pourvus d'évidements (4), et **en ce que** les supports de barres (1, 1') sont connectés les uns aux autres après le façonnage pour former des anneaux complets au niveau de leurs deux extrémités de butée (6, 7).

2. Procédé selon la revendication 1,
**caractérisé en ce que**
le point (8, 9) pour introduire les forces de flexion s'étend substantiellement sur toute l'étendue axiale (A) du dispositif de criblage.

3. Procédé selon la revendication 1 ou 2,
**caractérisé en ce que**
le point (8, 9) est fixe pendant le façonnage sur le support de barres (1, 1').

4. Procédé selon l'une quelconque des revendications précédentes,
**caractérisé en ce que**
les forces de flexion agissent à la fois radialement vers l'intérieur et également dans la direction périphérique.

5. Procédé selon l'une quelconque des revendications précédentes,
**caractérisé en ce que**
lors du façonnage, aucune force influençant le façonnage n'est transmise à la surface interne du composant à façonner.

6. Procédé selon l'une quelconque des revendications précédentes,
**caractérisé en ce que**
l'on n'utilise aucun moule conjugué lors du façonnage.

7. Procédé selon l'une quelconque des revendications précédentes,
**caractérisé en ce que**
les forces de flexion sont également appliquées pendant l'assemblage des supports de barres pour former des anneaux complets.

8. Procédé selon l'une quelconque des revendications précédentes,
**caractérisé en ce que**
les supports de barres sont serrés lors du façonnage dans les dispositifs de flexion (10, 11, 12, 13) appliquant les forces de flexion.

9. Procédé selon l'une quelconque des revendications précédentes,
**caractérisé en ce que**
l'introduction des forces de flexion est effectuée au maximum en quatre points, et l'on utilise à cet effet quatre dispositifs de flexion (10, 11, 12, 13).

10. Procédé selon la revendication 8 ou 9,
**caractérisé en ce que**
deux dispositifs de flexion (10, 11, 12, 13) forment à chaque fois un groupe de flexion qui transmet par coopération un couple de flexion aux supports de barres (1, 1').

11. Procédé selon l'une quelconque des revendications 1 à 8,
**caractérisé en ce que**
l'introduction des forces de flexion est effectuée en six points, et l'on utilise à cet effet quatre dispositifs de flexion (10, 11, 12, 13) et deux rouleaux de support (14).

12. Procédé selon la revendication 11,
**caractérisé en ce que**
deux dispositifs de flexion (10, 11, 12, 13) et un rouleau de support (14) forment à chaque fois un groupe de flexion, qui transmet par coopération un couple de flexion aux supports de barres (1, 1').

13. Procédé selon l'une quelconque des revendications précédentes,
**caractérisé en ce que**
les supports de barres (1, 1') sont connectés les uns aux autres par soudage au niveau de leurs extrémités de butée (6, 7).

14. Procédé selon l'une quelconque des revendications précédentes,
**caractérisé en ce que**
le façonnage et la connexion fixe des supports de barres (1, 1') sont effectués avec la même machine.

15. Procédé selon l'une quelconque des revendications précédentes,
**caractérisé en ce que**
le dispositif de criblage est constitué de segments (21, 22, 23), des segments de supports de barres étant pourvus de barres profilées (2, 2') et ensuite étant assemblés au niveau de leurs points de butée, notamment par soudage, **en ce que** deux points de butée (6, 7) restent ouverts et **en ce qu'**ils sont ensuite façonnés pour former un cylindre fermé.
